Europäisches Patentamt

European Patent Office

Office européen des brevets

(19)

(11) **EP 1 608 198 A1**

(12) **EUROPEAN PATENT APPLICATION**

(43) Date of publication:
**21.12.2005 Bulletin 2005/51**

(51) Int Cl.$^7$: **H04Q 7/38**

(21) Application number: **05012909.7**

(22) Date of filing: **15.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **15.06.2004 KR 2004044240**

(71) Applicant: **SAMSUNG ELECTRONICS CO., LTD.**
**Suwon-si, Gyeonggi-do (KR)**

(72) Inventors:
• **Cho, Jae-Weon**
  **Yeongtong-gu, Suwon-si, Gyeonggi-do (KR)**
• **Joo, Pan-Yuh**
  **Yeongtong-gu, Suwon-si, Gyeonggi-do (KR)**

• **Cho, Sie-Joon**
  **Yeongtong-gu, Suwon-si, Gyeonggi-do (KR)**
• **Lim, Chi-Woo**
  **Yeongtong-gu, Suwon-si, Gyeonggi-do (KR)**
• **Chang, Young-Bin**
  **Yeongtong-gu, Suwon-si, Gyeonggi-do (KR)**
• **Maeng, Seung-Joo**
  **Yeongtong-gu, Suwon-si, Gyeonggi-do (KR)**
• **Cho, Jae-Hee**
  **Yeongtong-gu, Suwon-si, Gyeonggi-do (KR)**

(74) Representative: **Grünecker, Kinkeldey,
Stockmair & Schwanhäusser Anwaltssozietät
Maximilianstrasse 58
80538 München (DE)**

(54) **Apparatus and method for supporting soft handover in broadband wireless access communication system**

(57) A method for supporting a handover in a Broadband Wireless Access communication system which includes a MSS, a serving BS, and a plurality of neighbor BSs, in which each of the BSs includes cells using subchannel bands different from each other, the method including the steps of measuring, by the MSS, intensities of signals received from the serving BS and the neighbor BSs, and transmitting to the serving BS a request for a handover based on the measured signal intensities; and establishing a simultaneous connection with the serving BS and a target BS in a handover area, thereby performing a soft handover, wherein the serving BS and the target BS allocate the same sub-channel including the same sub-carriers to the MSS at the same time when the MSS performs the soft handover.

FIG.8

EP 1 608 198 A1

**Description**

**BACKGROUND OF THE INVENTION**

1. Field of the Invention

The present invention relates to a broadband wireless access communication system, and more particularly to an apparatus and method for supporting a soft handover in a broadband wireless access communication system employing an orthogonal frequency division multiplexing scheme.

2. Description of the Related Art

Fourth generation (4G) communication systems (the next generation communication system) are being designed to provide users with services having various Qualities of Service (QoS) and supporting transmission speeds of about 100 Mbps. Current third generation (3G) communication systems support transmission speeds of about 384 kbps in an outdoor channel environment having a relatively unfavorable channel conditions, and support a maximum transmission speed of 2 Mbps in an indoor channel environment which exhibits relatively favorable channel conditions.
A wireless Local Area Network (LAN) system and a wireless Metropolitan Area Network (MAN) system generally support transmission speeds of 20 to 50 Mbps. Accordingly, in the current 4G communication systems, extensive research is actively being conducted to develop a new type of communication system for ensuring the mobility of the user equipment and the QoS in the wireless LAN and MAN systems supporting relatively high transmission speeds in order to support a high speed service to be provided by the 4G communication system.
Since the wireless MAN system has a wide service coverage area and supports a high transmission speed, it is suitable for supporting a high speed communication services. However, the wireless MAN system has been developed around a single cell structure, without taking into consideration the mobility of the user, i.e. a Subscriber Station (SS). The wireless MAN system also does not enable the provision of a high speed SS handover.
Research is actively being conducted to develop an apparatus and scenario for supporting a handover in the high speed movement of the SS. A representative system for reflecting movement of the SS is the IEEE (Institute of Electrical and Electronics Engineers) 802.16a communication system. According to the standard, an SS having mobility is referred to as a 'mobile subscriber station (MSS)'.

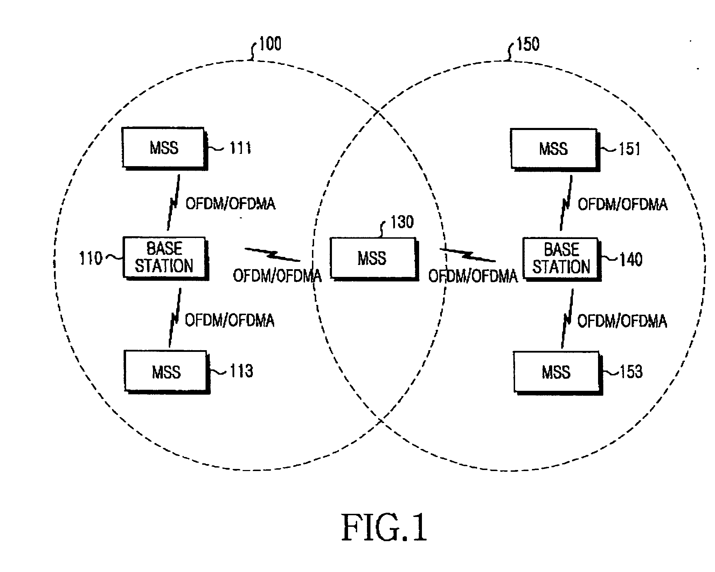

FIG. 1 is a block diagram illustrating a cell structure of a general IEEE 802.16e communication system.
The IEEE 802.16e communication system is based on a multi-cell structure, that is, has a cell 100 and a cell 150. In addition, the IEEE 802.16e communication system includes a base station 110 controlling the cell 100, a base station 140 controlling the cell 150, and a plurality of MSSs 111, 113, 130, 151 and 153. The transmission/reception of signals between the base stations 110 and 140 and the MSSs 111, 113, 130, 151 and 153 is executed according to the Orthogonal Frequency Division Multiplexing (OFDM) and the Orthogonal Frequency Division Multiple Access (OFDMA) schemes.
From among the MSSs 111, 113, 130, 151 and 153, the MSS 130 is located in a cell boundary area, i.e. a handover area, between the cell 100 and the cell 150. Accordingly, only when a handover for the MSS 130 is supported, is it possible to support the mobility of the MSS 130.
The wireless MAN system is a broadband wireless access (BWA) communication system, which has a wider service coverage area and supports a higher transmission speed than the wireless LAN system. The IEEE 802.16e communication system employs the OFDM scheme and the OFDMA scheme in order to enable a physical channel of the wireless MAN system to support a broadband transmission network.
As described above, the IEEE 802.16e system supports a handover for an MSS, but supports only a handover according to a hard handover scheme. According to the hard handover scheme, the MSS terminates all connections to a serving base station currently providing service before establishing a new connection to another base station, i. e. to a target base station, set to receive the new service.
In the IEEE 802.16e communication system, when the intensity, i.e. the carrier-to-interference-and-noise ratio (CINR), of a signal received from a current serving base station decreases to such a degree that it is impossible to maintain communication with the current serving base station, the MSS performs a handover to a neighbor base station (i.e. a target base station) different from the current serving base station according to a request of the MSS or current serving base station.
While the MSS is performing a handover operation to the target base station in the IEEE 802.16e communication system, if the CINR of a signal received from the target base station decreases to such a degree that it is impossible to receive a desired service from the target base station, the MSS can change its connection back to the serving base station. Signal shadowing occurs due to obstructions on the wireless channel. When an MSS passes through a cell boundary area, this is, when the MSS is located in a handover area, a phenomenon in which the CINR of a signal received from the target base station becomes greater than and then less than that of a signal received from the serving base station occurs. If it is determined that a handover is initialized at a time point at which the intensity of a signal received from the target base station becomes equal to that of a signal received from the serving base station, a handover operation may frequently occur while the MSS is passing through the cell boundary area. Such a phenomenon is called a 'ping-pong effect'. When the ping-pong effect occurs, handover signaling greatly increases, so that the probability of handover failure also increases.

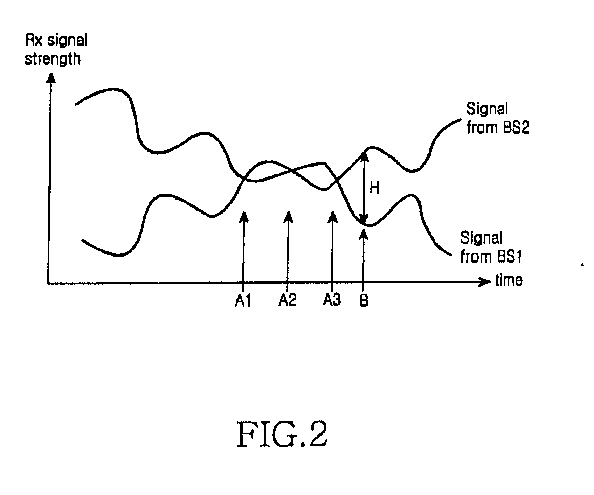

FIG. 2 is a graph for explaining a ping-pong effect occurring in the IEEE 802.16e communication system.

FIG. 2 shows a ping-pong effect occurring in the the conventional hard handover when an MSS moves from a first base station (BS 1) to a second base station (BS 2). To be specific, FIG. 2 is a graph for illustrating the intensities of signals received by the MSS from the first and second base stations when the MSS is located in a handover area which is a service coverage area overlapped by the first and second base stations. In the following description, it is presumed that the first base station is a serving base station (serving BS) and the second base station is a target base station (target BS) for convenience of description.

Referring to FIG. 2, when the MSS moves from the serving BS (BS 1) to the target BS (BS 2), a handover is executed at three points in time in total, i.e. at time 'A1', 'A2' and 'A3'. This is because it is assumed that the normal IEEE 802.16e communication system performs a hard handover, and that the hard handover is performed at a time at which the CINR of a signal received from the target BS becomes equal to that of a signal received from the serving BS.

As described above, the occurrence of the ping-pong effect increases the signaling load of the system, which increases the probability of handover failure and also deteriorates the performance of the entire system.

In order to avoid the ping-pong effect which is problematic of the hard handover, a handover parameter called 'Hysteresis margin' may be used. In other words, while the MSS moves from the serving BS to the target BS, a handover is performed only when the intensity of a signal received from the target BS is greater than that of the signal received from the serving BS by the Hysteresis margin. When the Hysteresis margin is used, it is possible to prevent an unnecessary handover operation resulting in the ping-pong effect.

When the Hysteresis margin is used, a handover is performed not in the handover area but at a location near to the target BS, i.e. at a location near to the target BS from a cell boundary. Therefore, as compared with the case in which the Hysteresis margin is not used, the intensity of a signal received from the serving BS at the cell boundary may be very poor.

In FIG. 2, when a Hysteresis margin is set as 'H' and the Hysteresis margin 'H' is used, the MSS performs a handover only once at time 'B'. It can be confirmed that the intensity of a signal received from the serving BS when the Hysteresis margin is used is less than that when the Hysteresis margin is not used. When the Hysteresis margin is used, the intensity of a signal received from the serving BS becomes poor, so that the connection between the MSS and the serving BS may be cut off before the MSS completes a handover to the target BS.

In order to solve the problem of the hard handover as described above, a soft handover scheme has been proposed. The soft handover scheme is a communication technique, wherein the MSS establishes a connection to the target BS before ending a connection to the serving BS so that the MSS performs transmission/reception with two BSs (i.e. the serving BS and target BS) at the same time in a predetermined cell boundary area, i.e. in a handover area.

When the soft handover is performed in a downlink, the serving BS and the target BS transmit the same data to one MSS through wireless channels occupying the same frequency band at the same time. Also, when the soft handover is performed in an uplink, both of the serving BS and target BS receive a signal transmitted from the MSS. When the soft handover scheme is employed, it is possible to prevent both the ping-pong effect which is a problematic of the hard handover and the phenomenon of decreasing signal intensity. In addition, when the soft handover is employed, the MSS is simultaneously allocated with wireless channels from the two base stations in a downlink, so that the CINR of a received signal can be improved. Also, since the two BSs simultaneously receive a signal transmitted from one MSS in an uplink, it is possible to improve the quality of the uplink by applying a macro diversity scheme to two signals received in the serving BS and the target BS.

Although the soft handover has the above-mentioned advantages, a difficulty lies in applying the soft handover to the system without changing the current standardized sub-channel allocation scheme in the normal IEEE 802.16e communication system. That is, in order to provide the soft handover, two neighbor BSs, i.e. a serving BS and a target BS, must allocate the same sub-channel that includes the same sub-carriers at the same time. The sub-channel represents a channel that includes at least one sub-carrier, and sub-carriers included in the sub-channel may or may not be neighbor to each other in the frequency domain.

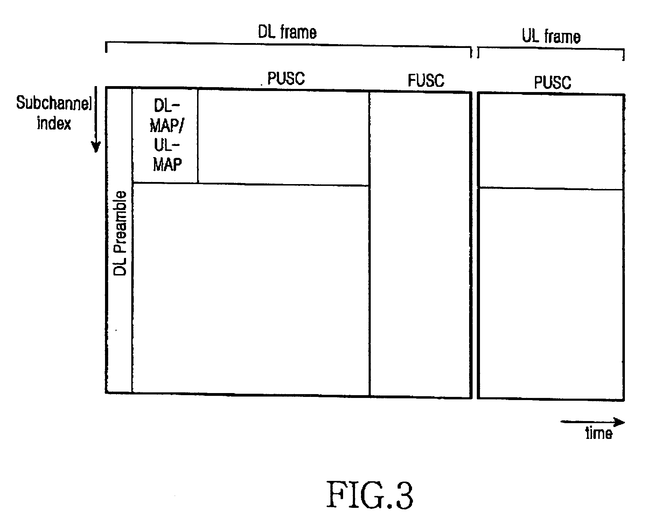

FIG. 3 is a diagram illustrating the frame structure of a normal IEEE 802.16e communication system.

First, the frame includes a Downlink frame (DL frame) and an Uplink frame (UL frame). The downlink frame includes a preamble area, a broadcasting control area and a data transmission area. The broadcasting control area includes a downlink MAP (DL-MAP) area and an uplink MAP (UL-MAP) area. The data transmission area may be classified into a partial-usage-of-subchannels (PUSC) area and a full-usage-of-subchannels (FUSC). The PUSC sub-channel and the FUSC sub-channel may be distinguished on a time division basis in the same frame. Also, the uplink frame includes an FUSC area and a PUSC area. FIG. 3 illustrates a frame structure for sub-carrier allocation of a sector using a downlink PUSC, a downlink FUSC and an uplink PUSC.

A synchronization signal (e.g., a preamble sequence) for acquiring synchronization between a transmitter and a receiver, i.e. between a BS and an MSS, is transmitted through the preamble area. A DL-MAP message and a UL-MAP message are transmitted through the DL-MAP area and the UL-MAP area, respectively. Herein, information elements (IEs) included in the DL-MAP message and the UL-MAP message have no direct relation with the present invention, so description thereof will be omitted.

The PUSC area represents data burst areas that include sub-channels based on a PUSC scheme, and the FUSC area represents data bust areas that include sub-channels based on a FUSC scheme. The PUSC scheme and the FUSC scheme will now be described.

First, according to the PUSC scheme, each sector allocates and uses only partial sub-channels of all of the sub-channels. When the PUSC scheme is employed, the frequency reuse ratio becomes greater than "1". Therefore, PUSC areas different from each other are allocated to the sectors of two neighbor cells so as to avoid mutual interference between sectors. However, it is difficult that two BSs allocate an MSS located at a cell boundary with a PUSC area having the same sub-carrier.

Second, according to the FUSC scheme, all of the sectors of all cells allocate and use all of the sub-channels. When the FUSC scheme is employed, the frequency reuse ratio becomes "1". However, when the FUSC scheme is employed, although all of the sectors can use all of the sub-channels, a distinct set of sub-carriers configuring a sub-channel must be configured according to each sector. That is, it is necessary to design the FUSC so as to minimize the probability that corresponding sub-carriers between sub-channels will overlap, i.e. a hit probability. It is necessary to allocate the same sub-channel having the same sub-carriers to two sectors in order to provide the soft handover, but it is impossible, using the current FUSC scheme, to provide such sub-channel allocation. In other words, the current communication system has been proposed only for the sub-channel configuration schemes for supporting the FUSC and PUSC schemes, but does not provide a distinct sub-channel configuration scheme for supporting the handover scheme.

In spite of the merit of the soft handover as described above, a difficulty lies in providing the soft handover with a current sub-channel structure. Accordingly, it is necessary to develop a scheme capable of providing the soft handover in the broadband wireless access communication system.

## SUMMARY OF THE INVENTION

Accordingly, the present invention has been made to solve at least the above-mentioned problems occurring in the prior art, and an object of the present invention is to provide an apparatus and method for allocating sub-channels of an uplink and a downlink to perform a soft handover in an Orthogonal Frequency Division Multiple Access (OFDMA) communication system.

Another object of the present invention is to provide MAP information elements which are used to inform an MSS of information about a sub-channel allocated to perform a soft handover in an OFDMA communication system, and a procedure relating to the MAP information elements.

Still another object of the present invention is to provide an apparatus and method for managing an active set required to perform a soft handover in an OFDMA communication system.

Still another object of the present invention is to provide an apparatus and method for enabling each sector included in an active set to simultaneously allocate a PUSC sub-channel having the same sub-carrier and to transmit the same data to an MSS, thereby achieving a soft handover.

Still another object of the present invention is to provide a method for classifying neighbor sectors around an MSS into an active set, a holding set and a neighbor set, and for managing each of the sets.

Still another object of the present invention is to provide an apparatus and method for achieving a soft handover in an OFDMA communication system which can improve the quality of a received signal of an MSS located at a cell boundary and prevent a ping-pong effect.

To accomplish these and other objects, in accordance with one aspect of the present invention, there is provided a method for supporting a handover in a broadband wireless access communication system which includes a Mobile Subscriber Station(MSS), a serving Base Station(BS) currently providing service to the MSS, and a plurality of neighbor BSs different from the serving BS, in which each of the BSs includes cells using sub-channel bands different from each other, the method includes the steps of measuring, by the MSS, intensities of signals received from the serving BS and the neighbor BSs, and sending to the serving BS a request for a handover based on the measured signal intensities; and establishing a connection with a target BS, to which a handover of the MSS is requested, from among the neighbor BSs before terminating a connection with the serving BS, and establishing a simultaneous connection with the two BSs in a handover area, thereby performing a soft handover, wherein the serving BS and the target BS allocate the same sub-channel including the same sub-carriers to the MSS at the same time when the mobile subscriber station performs the soft handover.

In accordance with another aspect of the present invention, there is provided a method for supporting a soft handover in a communication system employing an Orthogonal Frequency Division Multiple Access (OFDMA) scheme, the method includes the steps of classifying neighbor sectors around a mobile subscriber station(MSS) into a predetermined number of groupsinlcuding an active set, a holding set and a neighbor set; simultaneously allocating to a particular mobile subscriber station by each sector included in the active set, an uplink/downlink PUSC sub-channel having an equal sub-carrier; defining MAP information elements for notifying the mobile subscriber station of information about the allocated sub-channel; and controlling a soft handover according to the classified groups.

In accordance with still another aspect of the present invention, there is provided a base station apparatus for supporting a soft handover in a communication system employing an Orthogonal Frequency Division Multiple Access scheme, the base station apparatus includes a sub-channel selector for receiving a control signal from an upper layer and selecting an uplink sub-channel and a downlink sub-channel which are allocated to a relevant mobile subscriber station, wherein the sub-channel selector controls a selection of a PUSC sub-channel area, a determination of a data burst allocation area, and a selection of sub-carriers to configure a sub-channel using downlink MAP information elements when the base station transmits a downlink data burst; and controls a selection of a PUSC sub-channel area, a determination of a data burst allocation area, and a selection of sub-carriers to configure a sub-channel using uplink MAP information elements when the BS receives an uplink data burst.

In accordance with still another aspect of the present invention, there is provided a mobile subscriber station apparatus for supporting a soft handover in a communication system employing an Orthogonal Frequency Division Multiple Access scheme, the mobile subscriber station apparatus includes a sub-channel selector for receiving a control signal from an upper layer and selecting an uplink sub-channel and a downlink sub-channel which are allocated to the mobile subscriber station; a preamble measurer for measuring a signal intensity of a received preamble and outputting a measured value; and a MAP PUSC area selector for selecting a PUSC area of a MAP message having the best reception quality from among PUSC areas of MAP massages of sectors included in an active set, on the basis of the intensity values of the preamble reception signals measured by the preamble measurer.

In accordance with still another aspect of the present invention, there is provided a system for supporting a handover in a broadband wireless access communication system which includes a mobile subscriber station, a serving base station currently providing service to the mobile subscriber station, and a plurality of neighbor base stations different from the serving base station, in which each of the base stations includes cells using sub-channel bands different from each other, the system includes a mobile subscriber station for measuring intensities of signals received from the serving base station and the neighbor base stations, transmitting to the serving base station a request for a handover based on the measured signal intensities, establishing a connection with a target base station, to which handover of the mobile subscriber station is requested, from among the adjacent base stations before terminating a connection with the serving base station, and establishing a simultaneous connection with the two base stations in a handover area, thereby performing a soft handover; and base stations for allocating a same sub-channel including same sub-carriers to the mobile subscriber station at the same time when the mobile subscriber station performs the soft handover.

## BRIEF DESCRIPTION OF THE DRAWINGS

The above and other objects, features and advantages of the present invention will be more apparent from the following detailed description taken in conjunction with the accompanying drawings, in which:

FIG. 1 is a block diagram illustrating a cell structure of a typical broadband wireless access communication system;

FIG. 2 is a graph for explaining a ping-pong effect occurring in a broadband wireless access communication system;

FIG. 3 is a diagram for illustrating a frame structure of a typical broadband wireless access communication system employing an Orthogonal Frequency Division Multiple Access scheme;

FIGs. 4A and 4B are diagrams illustrating a PUSC allocation scheme for a soft handover in a broadband wireless access communication system according to an embodiment of the present invention;

FIGs. 5A and 5B are diagrams for explaining a 2-way soft handover performance procedure in a broadband wireless access communication system according to an embodiment of the present invention;

FIGs. 6A and 6B are diagrams for explaining a 3-way soft handover performance procedure in a broadband wireless access communication system according to an embodiment of the present invention;

FIGs. 7A and 7B are diagrams for explaining a procedure of performing a hard handover after a 2-way soft handover in a broadband wireless access communication system according to an embodiment of the present invention;

FIG. 8 is a flowchart for explaining an operation procedure of processing a sector of a neighbor set to be included in an active set or a holding set in a broadband wireless access communication system according to an embodiment of the present invention;

FIG 9 is a block diagram illustrating an interior configuration of a base station for performing the functions for achieving the present invention; and

FIG. 10 is a block diagram illustrating an interior configuration of a mobile subscriber station for performing the functions for achieving the present invention.

## DETAILED DESCRIPTION OF THE PREFERRED EMBODIMENT

Hereinafter, one preferred embodiment of the present invention will be described with reference to the accompanying drawings. In the following description of the embodiments of the present invention, a detailed description of known functions and configurations incorporated herein will be omitted when it may obscure the subject matter of the present invention.

The present invention provides an apparatus and method for providing a soft handover in an Orthogonal Frequency Division Multiple Access (OFDMA) communication system. The present invention proposes a sub-channel allocation scheme for supporting the soft handover and a method for managing an active set according to the sub-channel allocation scheme. The active set is defined as a set of sectors which provide wireless channels for data transmission/reception to a current mobile subscriber station (MSS).

Also, the present invention employs a partial-usage-of-subchannels (PUSC) scheme in order to provide a soft handover. That is, each cell classifies all of the sub-channels into a plurality of sub-channel sets, and allocates each of the sub-channel sets to the PUSC area of each sector. Each of the sectors selects at least one PUSC sub-channel from among the allocated PUSC area and allocates the selected PUSC sub-channel to a MSS. In this case, for an MSS that is requesting a soft handover to an neighbor cell, the PUSC managed by a target sector of the neighbor cell can be used. As described above, a serving sector and a target sector allocates a sub-channel having the same sub-carrier to one MSS, so that the soft handover can be achieved.

Each sector associated with a soft handover, i.e. each sector included in an active set, allocates the same PUSC to an MSS performing a soft handover through a MAP message. It is unnecessary for the relevant MSS that is performing the soft handover to receive the MAP information of all of the sectors included in the active set. That is, the MSS measures the reception intensities of downlink control signals, e.g., the intensities of preamble reception signals, and receives the MAP information of only a sector corresponding to a received signal having the greatest intensity. This is because the MSS is allocated with the same PUSC although the MSS receives the MAP information of any one of sectors included in the active set.

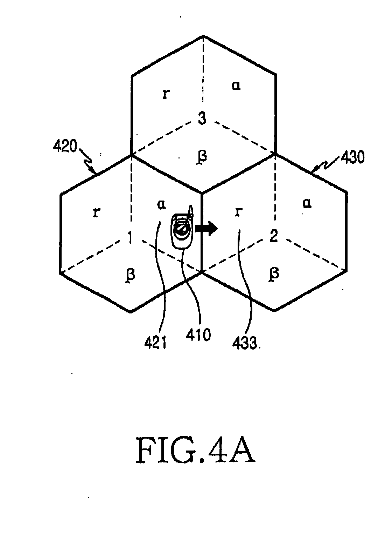

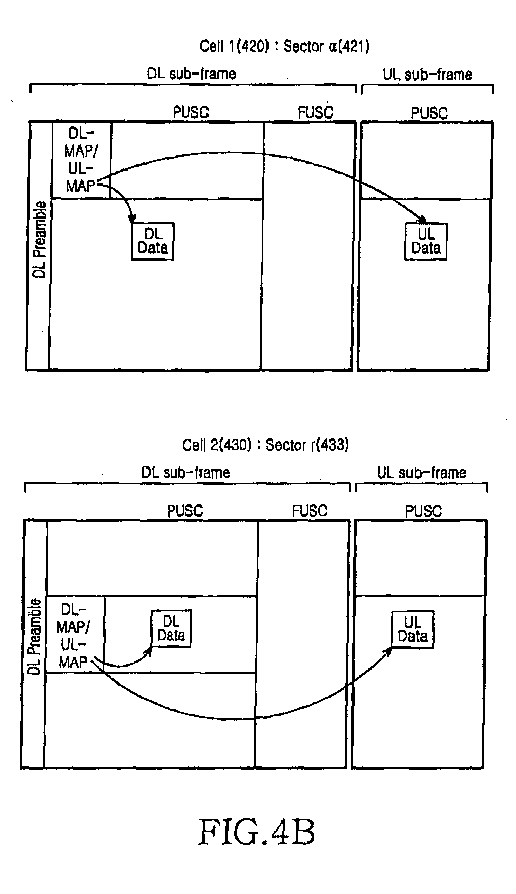

FIGs. 4A and 4B are diagrams illustrating a PUSC allocation scheme for a soft handover in a communication system according to an embodiment of the present invention.

FIGs. 4A and 4B illustrates the case in which an MSS 410 moves from an $\alpha$ sector 421 of cell #1 420, which is in a service coverage area of a BS 1, to a $\gamma$ sector 433 of cell #2 430, which is in a service coverage area of a BS 2. In this case, the MSS 410 uses only one PUSC sub-channel from among the PUSC area allocated to the $\alpha$ sector 421 of the cell #1 420.

The MSS 410 then moves to a boundary area of the $\gamma$ sector 433 of the cell #2 430 and perform a soft handover. While the soft handover is being executed, only one PUSC sub-channel from among the PUSC area allocated to the $\gamma$ sector 433 of the cell #2 430 is used. In this case, the MAP messages of the $\alpha$ sector 421 of the cell #1 420 and the $\gamma$ sector 433 of the cell #2 430 appoint the same PUSC.

According to an embodiment of the present invention, when PUSC is allocated to the MSS 410, any PUSC area included in an active set can be used. That is, from among PUSC areas of all of the sectors included in the active set, one PUSC area is selected and a PUSC sub-channel of the selected PUSC area may be allocated.

It is necessary for all of the sectors included in the active set to allocate the same PUSC. According to an embodiment of the present invention, the PUSC sub-channel may be allocated to frames in such a manner that the sub-channel changes at each frame or at every predetermined number of frames. Also, according to another embodiment of the present invention, a specific PUSC sub-channel may be fixedly allocated to a particular MSS during a soft handover period.

In order to achieve a soft handover according to the present invention, each sector included in an active set must inform an MSS of the PUSC information allocated to its own PUSC area through a MAP message. The transmission of such PUSC information can be achieved by a MAP information element of a normal OFDMA system. In addition, each sector must inform an MSS of the PUSC information through a MAP message, even when a relevant PUSC sub-channel is allocated not from its own PUSC area but from a PUSC area of an neighbor sector.

Table 1 shows a configuration of downlink MAP information elements (IEs) for providing a soft handover proposed by the present invention. The downlink MAP IEs included in Table 1 are used for a specific sector to inform an MSS of information about a PUSC sub-channel when the PUSC sub-channel is allocated not from a relevant PUSC area but from a PUSC area of an neighbor sector.

Table 1

| Syntax | Size | Notes |
|---|---|---|
| OFDMA Downlink PUSC Data Allocation in Another BS IE ( ) { | | |
| Extended DIUC | 4bits | Downlink Data Allocation in Another BS IE ( ) = 0x0? |
| Length | 4bits | Length=0x09 |
| Segment | 2bits | Segment number for other BS' sector |
| IDcell | 5bits | Cell ID for other BS' sector |
| OFDMA symbol offset | 8bits | |
| Subchannel offset | 6bits | |
| No. OFDMA symbols | 8bits | |
| No. Subchannels | 6bits | |
| Boosting | 3bits | 000: normal (not boosted); 001: +6dB; 010: -6dB; 011: +9dB; 100: +3dB; 101: -3dB; 110: -9dB; 111: -12dB; |
| Repetition coding indication | 2bits | 00 - No repetition coding 01 - Repetition coding of 2 used 10 - Repetition coding of 4 used 11 - Repetition coding of 6 used |
| CID | 16bits | |
| DIUC | 4bits | |
| *reserved* | 4bits | shall be set to zero |
| } | | |

Table 1 shows "OFDMA Downlink PUSC Data Allocation in Another BS IEs". From among the MAP IEs for using a downlink PUSC sub-channel of an neighbor sector, the first four bits represent the type of corresponding MAP IEs. Herein, the types of the MAP IEs have no direct relation with the present invention, so detailed description thereof will be omitted.

The 'Length' IE having a size of 4 bits represents the entire length of the MAP IEs, which is measured by the unit of byte. Since the MAP IEs have 72 bits in total, the 'Length' is set as '9'. The 'Segment' IE represents the segment number of an neighbor sector which transmits a downlink PUSC sub-channel. An MSS can determine the PUSC area, in which a data burst allocated through the MAP IEs is located, by using the segment number. The 'IDcell' IE represents a cell identifier (cell ID) of the neighbor sector which transmits a downlink PUSC sub-channel. The MSS uses the value of the 'IDcell' to select a sub-carrier included in a downlink PUSC sub-channel. The 'OFDMA Symbol Offset' IE represents an OFDMA symbol start position of an allocated data burst, and is described in a unit of 'OFDMA symbol'. The 'Subchannel Offset' IE represents a start index number of a sub-channel to transmit a data burst. The 'No. OFDMA Symbols' IE represents the number of OFDMA symbols occupied by a data burst to be transmitted. The 'No. Subchannels' IE represents the number of sub-channels to transmit a data burst. The 'Boosting' IE represents whether or not the sub-carriers of a data burst to be transmitted is boosted and a boosting value thereof. The 'Repetition Coding Indication' IE represents whether or not an information code of a data burst to be transmitted is subjected to repetition coding. The 'Basic ID' IE represents a connection identifier (CID) of an MSS to receive relevant MAP IEs. The 'DIUC' IE represents a physical channel processing scheme, e.g., a modulation scheme and a coding scheme, of a downlink data burst to be transmitted. Finally, the 'Reserved bit' IE represents padding bits which are padded so that the length of the MAP IEs may be equal to an integer times of the byte unit.

Table 2 shows a configuration of uplink MAP IEs for providing a soft handover proposed by the present invention. The uplink MAP IEs included in Table 2 are used for a specific sector to inform an MSS of information about a PUSC sub-channel when the PUSC sub-channel is allocated not from a relevant PUSC area but from a PUSC area of an neighbor sector.

Table 2

| Syntax | Size | Notes |
|---|---|---|
| OFDMA Uplink Data Allocation in Another BS IE () { | | |
| Extended UIUC | 4bits | Uplink Data Allocation in Another BS IE ( ) = 0x0? |
| Length | 4bits | Length=0x08 |
| CID | 16bits | |
| UIUC | 4bits | |
| Segment | 2bits | Segment number for other BS' sector |
| UL_IDcell | 7bits | Cell ID for other BS' sector |
| OFDMA symbol offset | 8bits | |
| Subchannel offset | 6bits | |
| Duration | 10bits | |
| Repetition coding indication | 2bits | 00 - No repetition coding<br>01 - Repetition coding of 2 used<br>10 - Repetition coding of 4 used<br>11 - Repetition coding of 6 used |
| *reserved* | 1bit | shall be set to zero |
| } | | |

Table 2 shows "OFDMA Uplink PUSC Data Allocation in Another BS IEs". From among MAP IEs for using an uplink PUSC sub-channel of an neighbor sector, the first four bits represents the type of corresponding MAP IEs. The types of the MAP IEs have no direct relation with the present invention, so detailed description thereof will be omitted.

The 'Length' IE having a size of 4 bits represents the entire length of the MAP IEs, which is expressed by the unit of byte. Herein, since the MAP IEs have 64 bits in total, the 'Length' is set as '8'. The 'Basic CID' IE represents a connection identifier of an MSS to receive relevant MAP IEs. The 'UIUC' IE represents a physical channel processing scheme, e.g., a modulation scheme and a coding scheme, of an uplink data burst to be transmitted. The 'Segment' IE represents the segment number of an neighbor sector which transmits an uplink PUSC sub-channel. An MSS can determine the PUSC area, in which a data burst allocated through the MAP IEs is located, by using the segment number. Herein, it is assumed that the MSS understands in advance the range of a PUSC area used by the neighbor sector through a handover control message or an information message of an neighbor base station before the MSS uses the MAP IEs shown in Table 2. The 'IDcell' IE represents a cell identifier (cell ID) of the neighbor sector which transmits an uplink PUSC sub-channel. The MSS uses the value of the 'IDcell' to select a sub-carrier included in an uplink PUSC sub-channel. The 'OFDMA Symbol Offset' IE represents an OFDMA symbol start position of an allocated data burst, and is described in a unit of 'OFDMA symbol'. The 'Subchannel Offset' IE represents a start index number of a sub-channel to transmit a data burst. The 'Duration' IE represents the number of OFDMA slots occupied by a data burst. The 'Repetition Coding Indication' IE represents whether or not an information code of a data burst to be transmitted is subjected to repetition coding. Finally, the 'Reserved bit' IE represents padding bits which are padded so that the length of the MAP IEs may be equal to an integer times of the byte unit.

Another configuration of downlink MAP IEs for providing a soft handover proposed by the present invention, which is different from that shown in Table 1, will be described with reference to Table 3.

Table 3 shows another configuration of downlink MAP IEs for providing a soft handover proposed by the present invention. The downlink MAP IEs shown in Table 3 are used for a specific sector to notify an MSS of information about a PUSC sub-channel when the PUSC sub-channel is allocated not from a relevant PUSC area but from a PUSC area of an neighbor sector.

Table 3

| Syntax | Size | Notes |
|---|---|---|
| OFDMA Downlink PUSC Data Allocation in Another BS IE ( ) { | | |
| Extended DIUC | 4bits | Downlink Data Allocation in Another BS IE ( ) = 0x0? |
| Length | 4bits | Length=0x0A |
| Segment | 2bits | Segment number for other BS' sector |
| IDcell | 5bits | Cell ID for other BS' sector |
| Used Subchannels | 6bits | Used subchannels at other BS' sector<br><br>Bit #0: 0-11<br><br>Bit #1: 12-19<br><br>Bit #2: 20-31<br><br>Bit #3: 32-39<br><br>Bit #4: 40-51<br><br>Bit #5: 52-59 |
| OFDMA symbol offset | 8bits | |
| Subchannel offset | 6bits | |
| No. OFDMA symbols | 8bits | |
| No. Subchannels | 6bits | |
| Boosting | 3bits | 000: normal (not boosted);<br><br>001: +6dB; 010: -6dB; 011: +9dB;<br><br>100: +3dB; 101: -3dB; 110: -9dB;<br><br>111: -12dB; |
| Repetition coding indication | 2bits | 00 - No repetition coding<br><br>01 - Repetition coding of 2 used<br><br>10 - Repetition coding of 4 used<br><br>11 - Repetition coding of 6 used |
| CID | 16bits | |
| DIUC | 4bits | |
| *reserved* | 6bits | shall be set to zero |
| } | | |

As shown in Table 3, a different point between the MAP IEs of Table 3 and the MAP IEs of Table 1 is that the MAP IEs of Table 3 further includes an information element of 'Used Subchannels'. The 'Used Subchannels' IE appoints a range of a PUSC area of an neighbor sector allocated through the MAP IEs. That is, an MSS can understand information that pertains to sub-channels, which the neighbor sector is using, by using the bit-map information included in the 'Used Subchannels' IE. In Table 3, the other fields except for the 'Used Subchannels' are nearly identical to those shown in Table 1, so detailed description thereof will be omitted. The length of the MAP IEs have 80 bits in total, so that the 'Length' IE field is set as '10'.

In addition, according to an embodiment of the present invention, when information about downlink 'Used Channels' IE is reported to an MSS through an upper message either before a handover initiation or during a handover initiation procedure, the MAP IEs shown in Table 1 may be used during a soft handover. In contrast, when information about the 'Used Channels' IE is not reported to an MSS before a soft handover is performed, the MAP IEs shown in Table 3 must be used during the soft handover. That is, according to system's situation, the MAP IEs of Table 1 and the MAP IEs of Table 3 may be selectively used.

Meanwhile, in order to perform a soft handover according to the present invention, the difference between the transmission delays of signals which are transmitted/received between an MSS and two BSs, i.e. a serving BS and a target BS must be less than the length of a cyclic prefix (CP) of an OFDM symbol. In this case, the transmission delay of the two reception signals may be estimated by the difference 'Arrival_Time_Difference' between the reception arrival times of preambles transmitted in the downlink.

When a soft handover is initiated, an MSS measures an arrival time of a preamble reception signal received from each neighbor cell, and calculates a difference between each measured arrival time and a preamble arrival time received from a current-connected cell, on the basis of the preamble arrival time received from a current-connected cell. Thereafter, the calculated value is reported to a serving base station. Then the serving base station determines whether to allow a soft handover or not by using the reported value. This may be expressed as shown in Equation 1. That is, Equation 1 may be used to apply the above-mentioned condition required for a handover to a system.

$$Arrival\_Time\_Difference(j) = (1st\_Arrival\_Time\_AS)-(Arrival\_Time(j)) \qquad (1)$$

In Equation 1, the 'Arrival_Time_Difference (j)' represents a relative arrival time of a signal received from a $j^{th}$ sector included in a neighbor set. The '1st_Arrival_Time _AS' represents the earliest arrival time of arrival times of the preamble reception signals received from sectors included in an active set. The 'Arrival_Time (j)' represents an arrival time of a preamble reception signal received from the $j^{th}$ sector.

In this case, the value of 'Arrival_Time_Difference (j)' shown in Equation 1 is calculated in the MSS and then is included in a handover initiation request message to be reported to a BS. Typically, since an MSS handover request (MOB-MSSHO-REQ) message is used as a handover initiation request message in the IEEE 802.16e system, it is preferred that the 'Arrival_Time_Difference (j)' is newly added to the MOB-MSSHO-REQ message to be reported to the BS. Also, the value of 'Arrival_Time_Difference (j)' may be expressed with a basic unit of '(Tb/32)/4', in which 'Tb' represents the length of an effective OFDMA symbol.

A mixed scheme of the hard handover and the soft handover which is proposed by the present invention will be described. In order to achieve the mixed scheme of the hard handover and the soft handover according to an embodiment of the present invention, an active set, a holding set and a neighbor set are now defined and methods for managing the sets will be described.

The active set is defined as a set of sectors which currently provide wireless channels for data transmission/reception to an MSS.

The holding set is a set of sectors which are not included in the active set by a determination of the system although the intensities of signals received from the relevant sectors satisfies the condition required for the active set. Also, for a handover between neighbor sectors of the same base station, the system may instruct a particular MSS to perform a hard handover instead of a soft handover. In this case, the corresponding sector may be included in the holding set. In addition, for a handover between two sectors of different BSs, when the two sectors use the same PUSC area, the system may instruct a particular MSS to perform a hard handover instead of a soft handover, in which the corresponding sector may be included in the holding set.

The neighbor set is a set of the remaining sectors except for the sectors included in the active set and the holding set from among the all of the neighbor sectors.

First, a method for managing the active set for achieving a soft handover according to an embodiment of the present invention will be described.

The maximum number of sectors which can be included in the active set may be limited by the system. According to a management method for the active set of the present invention, when both of the following Equations 2 and 3 are satisfied, it is possible to include a relevant neighbor sector in the active set.

$$(Max\_P\_RX\_AS)-(P\_RX(j)) < H \ (dB) \qquad (2)$$

In Equation 2, the 'Max_P_RX_AS' represents the maximum value of the intensities of the preamble reception signals received from sectors included in the active set. The 'P_RX (j)' represents the intensity of the preamble reception signal received from a $j^{th}$ sector included in a neighbor set. The 'H' represents the 'Hysteresis margin'.

$$Arrival\_Time\_Difference(j) < c*Tg \qquad (3)$$

In Equation 3, the 'Arrival_Time _Difference (j)' represents a relative arrival time of a signal received from a

$j^{th}$ sector included in the neighbor set. The 'c' is a constant equal to or less than '1'. The 'Tg' represents the length of a CP.

When a sector included in the active set satisfies even one of the following Equations 4 and 5, the relevant sector is removed from the active set.

$$(Max\_P\_RX\_AS) - (P\_RX(j)) > H(dB) \qquad (4)$$

$$(1st\_Arrival\_Time\_AS)-(Arrival\_Time(j)) > c*Tg \qquad (5)$$

Next, a method for managing the holding set for achieving a soft handover according to an embodiment of the present invention will be described.

When a sector of a neighbor set satisfying Equation 2 does not satisfy Equation 3 not to be included in the active set, the relevant sector is included in the holding set. In addition, although a sector of a neighbor set satisfying Equation 2 satisfies Equation 3, the relevant sector is included in the holding set when not included in the active set by a direction of the system. When a sector included in the holding set satisfies Equation 4, the relevant sector is removed from the holding set.

When a specific sector included in the holding set satisfies the following Equation 6, all of the sectors currently-included in the active set are removed from the active set, and only the specific sector is included in the active set. That is, a hard handover is performed.

$$(P\_RX(j)) - (Max\_P\_RX\_AS) > H(dB) \qquad (6)$$

Preferred handover procedures based on the above-mentioned active set and holding set management methods will be described with reference to the accompanying drawings.

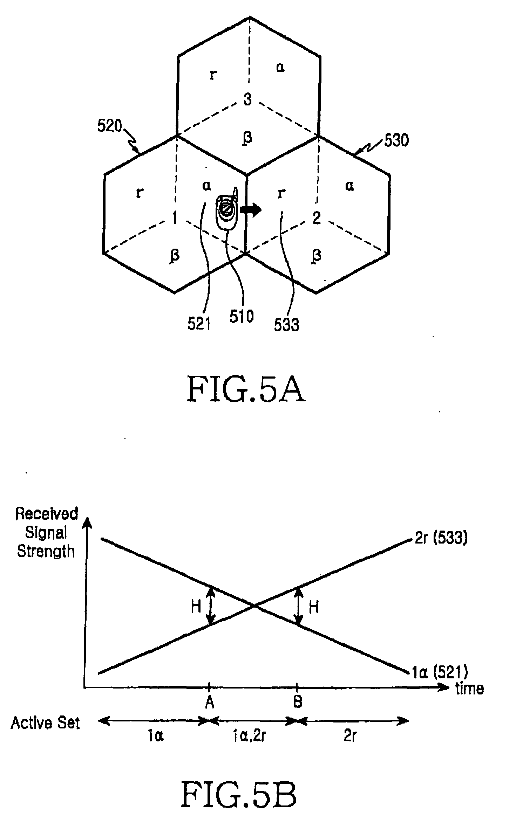

FIGs. 5A and 5B are diagrams for explaining a 2-way soft handover performance procedure in a communication system according to an embodiment of the present invention. FIGs. 5A and 5B show the case of a 2-way soft handover in which two sectors are included in the active set.

FIG 5A shows the case in which an MSS 510 moves from an α sector 521 of cell #1 520, which is in the service coverage area of BS 1, to a γ sector 533 of cell #2 530, which is in the service coverage area of BS 2. It is assumed in this embodiment shown in FIGs. 5A and 5B that Equation 3 is satisfied over all of the time-axis range. At time 'A' shown in FIG. 5B, the γ sector 533 of cell #2 530 satisfies Equation 2, thereby being included in the active set. At time 'B', the α sector 521 of cell #1 520 satisfies Equation 4, thereby being removed from the active set.

A soft handover period is from time 'A' to time 'B'. During this soft handover period, the α sector 521 of cell #1 520 and the γ sector 533 of cell #2 530 are included in the active set.

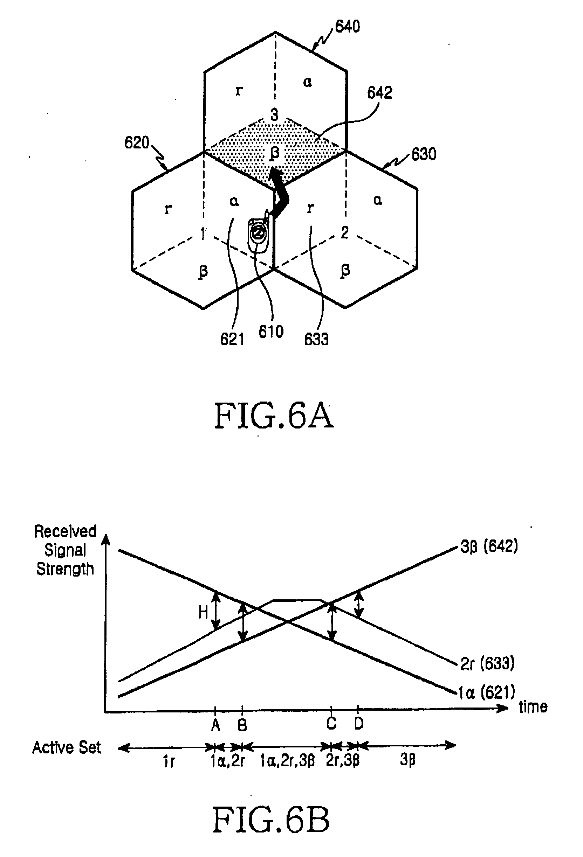

FIGs. 6A and 6B are diagrams for explaining a 3-way soft handover performance procedure in a communication system according to an embodiment of the present invention. FIGs. 6A and 6B show the case of a 3-way soft handover in which three sectors are included in the active set.

FIG. 6A shows the case in which an MSS 610 moves from an α sector 621 of cell #1 620 (the service coverage of BS 1) to a β sector 642 of cell #3 640 (the service coverage of BS 3) via a γ sector 633 of cell #2 630 (the service coverage of BS 2).

It is assumed in this embodiment shown in FIGs. 6A and 6B that Equation 3 is satisfied over all of the time-axis range. At time 'A' shown in FIG. 6B, the γ sector 633 of cell #2 630 satisfies equation 2, thereby being included in the active set. Also, at time 'B' shown in FIG. 6B, the β sector 642 of cell #3 640 satisfies Equation 2, thereby being included in the active set. Therefore, during a period from time 'A' to time 'B', the α sector 621 of cell #1 620 and the γ sector 633 of cell #2 630 are included in the active set.

Next, at time 'C', the α sector 621 of cell #1 620 satisfies Equation 4, thereby being removed from the active set. Accordingly, during a period from time 'B' to time 'C', the α sector 621 of cell #1 620, the γ sector 633 of cell #2 630 and the β sector 642 of cell #3 640 are included in the active set.

Thereafter, at time 'D', the γ sector 633 of cell #2 630 satisfies Equation 3, thereby being removed from the active set. Therefore, during a period from time 'C' to time 'D', the γ sector 633 of cell #2 630 and the β sector 642 of cell #3 640 are included in the active set.

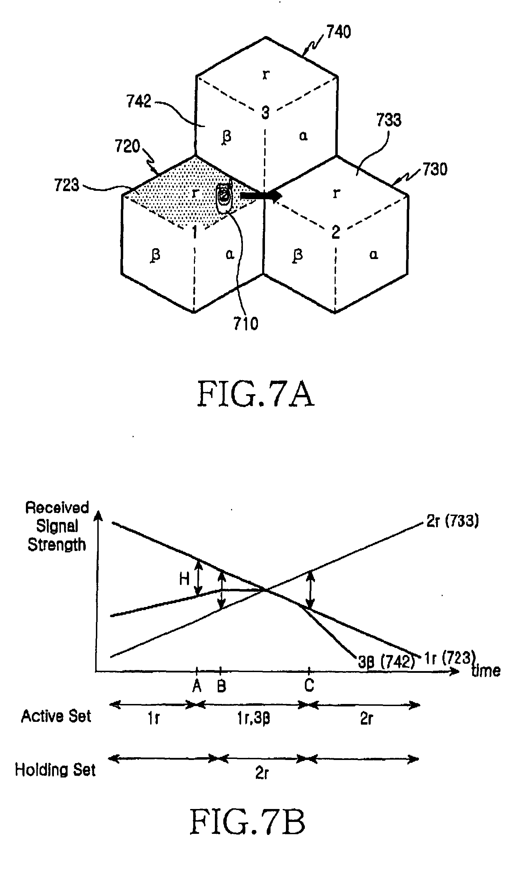

FIGs. 7A and 7B are diagrams for explaining a procedure of performing a hard handover after a 2-way soft handover in a communication system according to an embodiment of the present invention. FIGs. 7A and 7B show the case in which a 2-way soft handover, that two sectors are included in the active set, is first initiated and then a hard handover is performed.

Referring to FIG. 7A, an MSS 710 moves from a γ sector 723 of cell #1 720 (the service coverage of BS 1) to a γ sector 733 of cell #2 730 (the service coverage of BS 2) via a boundary of a β sector 742 of cell #3 740 (the service coverage of BS 3).

It is assumed in this embodiment shown in FIGs. 7A and 7B that Equation 3 is satisfied over all of the time-axis range. In addition, for convenience of description, this embodiment is explained without considering the signals of an α sector of cell #1 720, an α sector of cell #3 740 and a β sector of cell #2 730. At time 'A' shown in FIG. 7B, the β sector 742 of cell #3 740 satisfies Equation 2, thereby being included in the active set. At time 'B', although the γ sector 733 of cell #2 730 satisfies Equation 2, the system does not allow the γ sector 733 of cell #2 730 to be included in the active set. In this case, the γ sector 733 of cell #2 730 is included in the holding set.

At time 'C', the γ sector 733 of cell #2 730 satisfies equation 6. Accordingly, at time 'C', the γ sector 723 of cell #1 720 and the β sector 742 of cell #3 740, which have been currently included in the active set, are removed from the active set, and then the γ sector 733 of cell #2 730 is included in the active set. That is, a hard handover is performed at time 'C'.

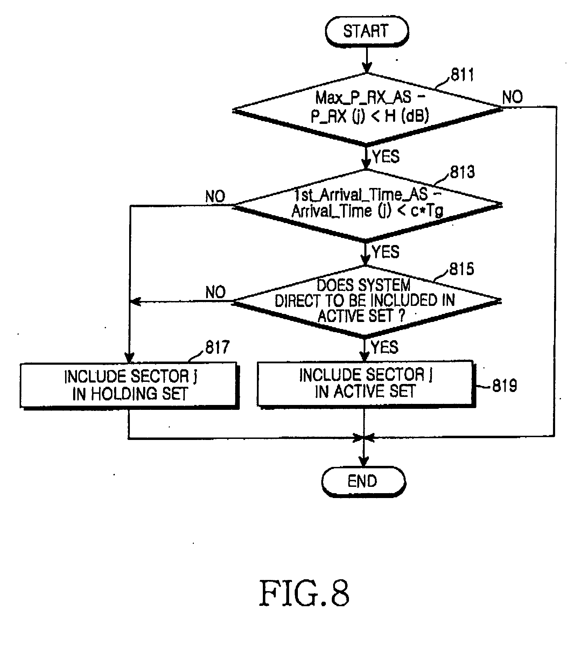

FIG. 8 is a flowchart for explaining an operating procedure of processing a sector of a neighbor set to be included in an active set or a holding set in a communication system according to an embodiment of the present invention.

First, in step 811, the intensity of a preamble reception signal received from a jth sector of a neighbor set is compared with the maximum values of the intensities of preambles received from an active set, and then it is determined if the result value of the comparison satisfies Equation 2. That is, the difference between the maximum value 'Max_P_RX_AS' from among intensities of preamble reception signals received from the sectors included in the active set and an intensity 'P_RX (j)' of a preamble reception signal received from the jth sector included in the neighbor set is calculated, and then is compared with a Hysteresis margin 'H'. When the result of the comparison satisfies Equation 2, i.e. when the result value obtained the calculation is less than the hysteresis margin, step 813 is performed. In step 813, an arrival time of a preamble received from the jth sector is compared with the earliest arrival time of the arrival times of the preambles received from the active set, and then it is determined if the result value of the comparison satisfies Equation 3. The difference between the earliest arrival time '1st_Arrival_Time_AS' from among the arrival times of the preamble reception signals received from the sectors included in the active set and the arrival time 'Arrival_Time (j)' of the preamble reception signal received from the jth sector is calculated. Then, the calculated difference value is compared with a value obtained by multiplying a constant 'c(c≤1)' by the length 'Tg' of the CP. When the result of the comparison satisfies Equation 3, i.e. when the calculated difference value is less than the value obtained by multiplying the constant 'c' by the length 'Tg' of the CP, step 815 is performed. In contrast, when the comparison result of step 813 does not satisfy Equation 3, step 817 is performed. In step 817, the jth sector is included in the holding set, and then the procedure ends.

In step 815, the system determines whether or not to allow the jth sector to be included in the active set, and then directs the determination to the MSS. Thereafter, one of steps 819 and 817 is performed according to the determination and directed contents. That is, when the system directs that the jth sector should be included in the active set, step 819 is performed. In step 819, the jth sector is included in the active set, and then the procedure ends. In contrast, when the system directs that the jth sector should not be included in the active set, step 817 is performed. In step 817, the jth sector is included in the holding set, and then the procedure ends.

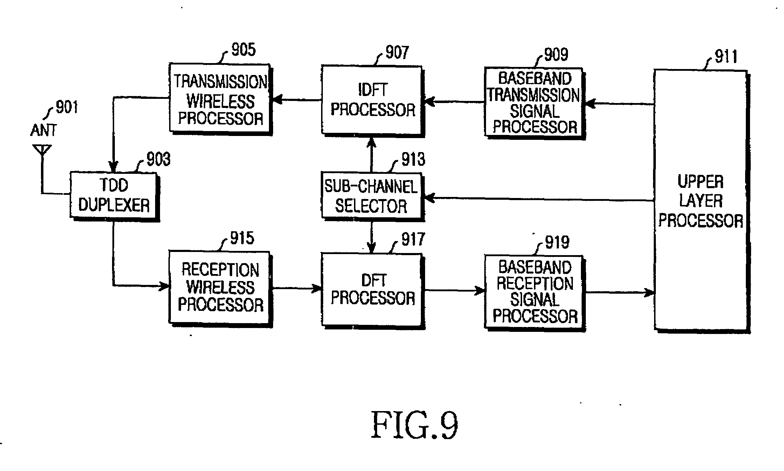

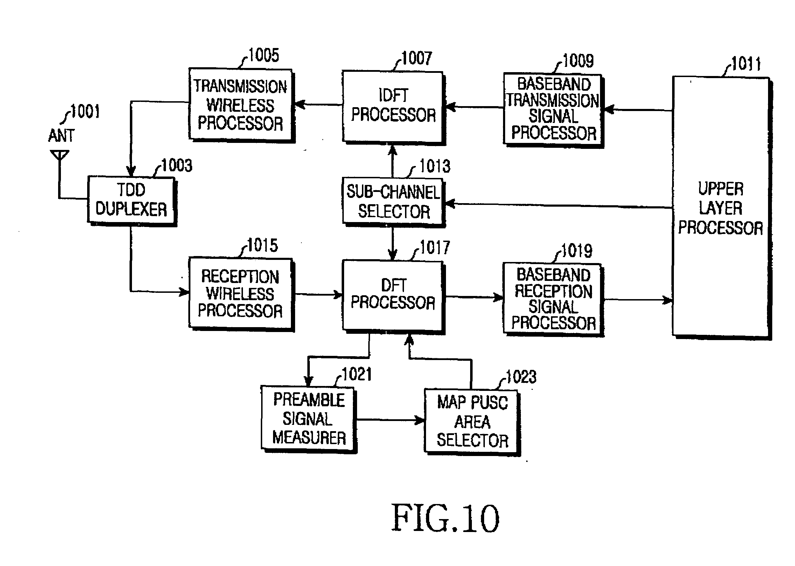

Configurations of a BS apparatus and an MSS apparatus, which can perform functions corresponding to the above-mentioned sub-channel allocation and the active set and holding set management methods for a soft handover, will be described with reference to FIGs. 9 and 10.

FIG. 9 is a block diagram illustrating a configuration of the base station apparatus according to an embodiment of the present invention.

Referring to Fig. 9, The BS apparatus includes an antenna 901, a Time Division Duplexing (TDD) duplexer 903, a transmission wireless processor 905, an Inverse Discrete Fourier Transform (IDFT) processor 907, a baseband transmission signal processor 909, an upper layer processor 911, a reception wireless processor 915, a Discrete Fourier Transform (DFT) processor 917, a baseband reception signal processor 919, and a sub-channel selector 913.

First, in the transmission section of the BS apparatus, the baseband transmission signal processor 909 generates and outputs a transmission signal to the IDFT processor 907. The IDFT processor 907 receives the generated baseband transmission signal, performs IDFT with respect to the received transmission signal, and then outputs the IDFT-processed transmission signal to the transmission wireless processor 905. The transmission wireless processor 905 performs a wireless processing with respect to the IDFT-processed transmission signal, and then outputs the wireless-processed transmission signal to the TDD duplexer 903. The TDD duplexer 903 transmits the wireless-processed transmission signal through the antenna 901 over the air.

Next, in the reception section of the BS apparatus, the TDD duplexer 903 receives a signal in a TDD scheme through the antenna 901. The TDD duplexer 903 outputs the received signal to the reception wireless processor 915. The reception wireless processor 915 receives the received signal, converts the received signal into a baseband signal, and then outputs the baseband signal to the DFT processor 917. The DFT processor 917 receives the baseband signal, performs DFT with respect to the baseband signal, and outputs the DFT-processed baseband signal to the baseband reception signal processor 919. The baseband reception signal processor 919 processes the DFT-processed baseband signal to restore a user signal.

Next, the sub-channel selector 913 receives a control signal from the upper layer processor 911, and controls the selection of uplink/downlink sub-channels (i.e. an uplink PUSC sub-channel and a downlink PUSC sub-channel) allocated to a relevant MSS.

When it is assumed that a PUSC sub-channel of the PUSC area of the base station is allocated to an MSS connected to the BS, information of "OFDMA Downlink PUSC Data Allocation in Another BS IEs" shown in Table 1 or 3 and "OFDMA Uplink PUSC Data Allocation in Another BS IEs" shown in Table 2 is used.

When a downlink data burst is transmitted, a PUSC area is selected by using segment information of "OFDMA Downlink PUSC Data Allocation in Another BS IEs" shown in Table 1 or 3. When "OFDMA Downlink PUSC Data Allocation in Another BS IEs" of Table 3 is used, information about "Used Subchannels" is additionally used. Next, an area for the data burst allocation is determined by using information about "OFDMA symbol offset", "Subchannel offset", "No. OFDMA symbols" and "No. Subchannels". Then, the sub-carriers used to configure a sub-channel are selected by using information about the "IDcell".

When an uplink data burst is received, a PUSC area is selected by using segment information in "OFDMA Uplink PUSC Data Allocation in Another BS IEs" shown in Table 2. Then, an area for the data burst allocation is determined by using the information about "OFDMA symbol offset", "Subchannel offset" and "Duration". Then, the sub-carriers used to configure a sub-channel are selected by using information about "UL_IDcell".

The sub-channel selector 913 outputs information about a selected uplink PUSC sub-channel to the IDFT processor 907. The IDFT processor 907 maps the generated baseband transmission signal on the selected uplink PUSC sub-channel. Also, the sub-channel selector 913 outputs information about a selected downlink PUSC sub-channel to the DFT processor 917. The DFT processor 917 extracts a baseband signal from the selected downlink PUSC sub-channel.

FIG 10 is a block diagram illustrating a configuration of the MSS apparatus according to an embodiment of the present invention.

Referring to Fig. 10, The MSS apparatus includes an antenna 1001, a TDD duplexer 1003, a transmission wireless processor 1005, an IDFT processor 1007, a baseband transmission signal processor 1009, an upper layer processor 1011, a reception wireless processor 1015, a DFT processor 1017, a baseband reception signal processor 1019, a sub-channel selector 1013, a preamble signal measurer 1021, and a MAP PUSC area selector 1023.

In the transmission section of the MSS apparatus, the baseband transmission signal processor 1009 generates and outputs a transmission signal to the IDFT processor 1007. The IDFT processor 1007 receives the generated baseband transmission signal, performs IDFT with respect to the received transmission signal, and then outputs the IDFT-processed transmission signal to the transmission wireless processor 1005. The transmission wireless processor 1005 performs a wireless processing with respect to the IDFT-processed transmission signal, and then outputs the wireless-processed transmission signal to the TDD duplexer 1003. The TDD duplexer 1003 transmits the wireless-processed transmission signal through the antenna 1001 over the air.

In the reception section of the MSS apparatus, the TDD duplexer 1003 receives a signal in a TDD scheme through the antenna 1001. The TDD duplexer 1003 outputs the received signal to the reception wireless processor 1015. The reception wireless processor 1015 receives the received signal, converts the received signal into a baseband signal, and then outputs the baseband signal to the DFT processor 1017. The DFT processor 1017 receives the baseband signal, performs DFT with respect to the baseband signal, and outputs the DFT-processed baseband signal to the baseband reception signal processor 1019. The baseband reception signal processor 1019 processes the DFT-processed baseband signal to restore a user signal.

The sub-channel selector 1013 receives a control signal from the upper layer processor 1011, and selects uplink/downlink sub-channels, i.e. an uplink PUSC sub-channel and a downlink PUSC sub-channel, allocated to a relevant MSS.

It is assumed that MAP IEs appointing a data burst to the MSS include "OFDMA Downlink PUSC Data Allocation in Another BS IEs" shown in Table 1 or 3 and "OFDMA Uplink PUSC Data Allocation in Another BS IEs" shown in Table 2. Then, the MSS determines that the data burst is allocated not from the PUSC area of a currently-received MAP message but from another PUSC area. Next, the MSS finds the location of the data burst allocated to the MSS by using information of "OFDMA Downlink PUSC Data Allocation in Another BS IEs" shown in Table 1 or 3 and "OFDMA Uplink PUSC Data Allocation in Another BS IEs" shown in Table 2.

When a downlink data burst is received, a PUSC area is selected by using the segment information of "OFDMA Downlink PUSC Data Allocation in Another BS IEs" shown in Table 1 or 3. When "OFDMA Downlink PUSC Data Allocation in Another BS IEs" of Table 3 is used, the information about "Used Subchannels" is additionally used. Next, an area for the data burst allocation is determined by using information about "OFDMA symbol offset", "Subchannel offset", "No. OFDMA symbols" and "No. Subchannels". Then, the sub-carriers used to configure a sub-channel are selected by using information about the "IDcell".

When an uplink data burst is transmitted, a PUSC area is selected by using segment information in "OFDMA Uplink PUSC Data Allocation in Another BS IEs" shown in Table 2. Then, an area for the data burst allocation is determined by using information about "OFDMA symbol offset", "Subchannel offset" and "Duration". Then, sub-carriers to configure a sub-channel are selected by using information about "UL_IDcell".

The sub-channel selector 1013 outputs information about a selected uplink PUSC sub-channel to the IDFT processor 1007. The IDFT processor 1007 maps the generated baseband transmission signal on the selected uplink PUSC sub-channel. Also, the sub-channel selector 1013 outputs information about a selected downlink PUSC sub-channel to the DFT processor 1017. The DFT processor 1017 extracts a baseband signal from the selected downlink PUSC sub-channel.

The preamble measurer 1021 and the MAP PUSC area selector 1023 selects a PUSC area of a MAP message having the greatest signal intensity in order to receive the MAP message having the greatest reliability during a soft handover. The preamble measurer 1021 measures the intensities of the received preamble reception signals, and outputs the measured values to the MAP PUSC area selector 1023. The MAP PUSC area selector 1023 selects a PUSC area of a MAP message having the best reception quality from among PUSC areas of MAP massages of sectors included in an active set, on the basis of the measured intensity values of the preamble reception signals. The MAP PUSC area selector 1023 outputs information about the selected MAP message's PUSC area to the DFT processor 1017 so that the DFT processor 1017 and baseband reception signal processor 1019 may restore the MAP massage having a high reliability.

As described above, according to the embodiments of the present invention, each sector included in an active set simultaneously allocates a PUSC sub-channel having the same sub-carrier to an MSS and transmits the same data to the MSS, thereby achieving a soft handover. Also, in order to perform the soft handover, the present invention defines MAP IEs, which are used to notify an MSS of information about an allocated sub-channel, and a procedure relating to the MAP IEs. In addition, in order to perform the soft handover, neighbor sectors around an MSS are classified into an active set, a holding set and a neighbor set, a method for managing each of the sets is proposed. According to the embodiments of the present invention as described above, it is possible to improve the quality of a received signal of an MSS located at a cell boundary and also to prevent a ping-pong effect which is a defect in the soft handover.

As described above, according to an apparatus and method for supporting a soft handover in a broadband wireless access communication system, a frame structure, a scenario and a message capable of supporting a soft handover between neighbor two cells are defined to support not only the soft handover but also a hard handover between BSs in the 802.16e communication system, so that it is possible to support the mobility of an MSS between cells.

In addition, according to the embodiments of the present invention, a PUSC allocation method for uplink and downlink, MAP information elements and an active set management method are proposed in order to achieve a soft handover in an OFDMA communication system. When these methods are used to achieve a soft handover, it is possible to improve the quality of a received signal of an MSS located at a cell boundary and to prevent the ping-pong effect which has been a problem in the soft handover.

While the present invention has been shown and described with reference to certain preferred embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

**Claims**

**1.** A method for supporting a handover in a broadband wireless access communication system which includes a Mobile Subscriber Station (MSS), a serving Base Station (BS) currently providing service to the MSS, and a plurality of neighbor BSs different from the serving BS, in which each of the BSs includes cells using sub-channel bands different from each other, the method comprising the steps of:

measuring, by the MSS, intensities of signals received from the serving BS and the neighbor BSs, and sending to the serving BS a request for a handover based on the measured signal intensities; and
establishing a connection with a target BS, to which a handover of the MSS is requested, from among the neighbor BSs before terminating a connection with the serving BS, and establishing a simultaneous connection with the two BSs in a handover area, thereby performing a soft handover,

wherein the serving BS and the target BS allocate the same sub-channel including the same sub-carriers to the MSS at the same time when the mobile subscriber station performs the soft handover.

2. The method as claimed in claim 1, wherein the step of performing the soft handover comprises the steps of:

> measuring, by the MSS, arrival times of signals received from the neighbor BSs before performing the handover from the serving BS;
> calculating difference values of the measured arrival times, on the basis of an arrival time of a signal received from the serving BS currently-connected with the MSS;
> reporting the calculated values to the serving BS; and
> determining, by the serving BS, whether or not to allow the soft handover of the MSS by using the reported values.

3. The method as claimed in claim 2, wherein the calculating step for the soft handover is performed by using a following equation,

$$Arrival\_Time\_Difference(j) = (1st\_Arrival\_Time\_AS) - (Arrival\_Time(j)),$$

where 'Arrival_Time_Difference (j)' represents a relative arrival time of a signal received from a $j^{th}$ sector included in a neighbor set, '1st_Arrival_Time_AS' represents an earliest arrival time of arrival times of signals received from neighbor BSs included in an active set, and 'Arrival_Time (j)' represents an arrival time of a signal received from the $j^{th}$ neighbor BS.

4. The method as claimed in claim 3, wherein a value of the 'Arrival_Time_Difference (j)' is measured by the MSS, and is included in a handover request message of the MSS to be reported to the BS.

5. The method as claimed in claim 3, wherein the active set is a set of BSs which currently provide wireless channels for data transmission/reception to the MSS.

6. The method as claimed in claim 3, wherein a holding set is a set of BSs which are not included in the active set based on a determination of a system.

7. The method as claimed in claim 3, wherein the neighbor set is a set of the remaining BSs except for the BSs included in the active set and the holding set from among the neighbor BSs.

8. The method as claimed in claim 1, wherein the MSS is allocated with the same sub-channel through MAP information elements (IEs) from the serving BS and the target BS, and transmits/receives data to/from the BSs based on the allocated sub-channel.

9. The method as claimed in claim 8, wherein the MAP information elements for supporting the soft handover are used to inform the MSS of information about the allocated sub-channel, when the sub-channel is allocated not from among a relevant sub-channel area of the serving BS but from among a sub-channel area of an neighbor BS.

10. The method as claimed in claim 8, wherein the MAP information elements include at least one of information about segment numbers of neighbor BSs transmitting sub-channels and information about cell identifiers of the neighbor BSs.

11. The method as claimed in claim 8, wherein the MAP information elements include at least one of information about a symbol start position of an allocated data burst and information about a start index number of a sub-channel for transmitting a data burst.

12. The method as claimed in claim 8, wherein the MAP information elements include information about whether or not an information code of a data burst to be transmitted has undergone repetition coding.

13. The method as claimed in claim 8, wherein the MAP information elements include information about a sub-channel which is being used by an neighbor BS.

14. The method as claimed in claim 13, wherein different MAP information elements are used, depending on whether or not information about a sub-channel, which is being used by the neighbor BS, is transmitted to the MSS during a handover.

15. The method as claimed in claim 8, wherein the MSS measures intensities of signals received from the plurality of neighbor BSs, and receives MAP information elements of only an neighbor BS from which a greatest intensity is measured.

16. The method as claimed in claim 1, wherein a sub-channel used for the soft handover is a PUSC (Partial Usage of Subchannels) type of sub-channel.

17. The method as claimed in claim 1, wherein PUSC managed by the target BS is used to be allocated to a MSS which requests a soft handover to the target BS.

18. The method as claimed in claim 1, wherein the scheme of allocating the sub-channel comprises the steps of:

dividing, by the serving BS and the target BS, all of the sub-channels into a plurality of sub-channel sets;
allocating each of the divided sub-channel sets to a PUSC area of a particular BS; and
selecting at least one PUSC sub-channel from among the allocated PUSC area, thereby allocating the selected PUSC sub-channel to the MSS.

19. The method as claimed in claim 1, wherein a difference between transmission delays of transmission/reception signals, which are transmitted/received between the MSS and the serving BS and target BS, is less than a length of a cyclic prefix of a predetermined symbol.

20. The method as claimed in claim 1, wherein transmission delays of signals received from the serving BS and target BS are estimated from a difference between reception arrival times of signals transmitted in a downlink.

21. A method for supporting a soft handover in a communication system employing an Orthogonal Frequency Division Multiple Access (OFDMA) scheme, the method comprising the steps of:

classifying neighbor sectors around a mobile subscriber station (MSS) into a predetermined number of groups including an active set, a holding set and a neighbor set;
simultaneously allocating, by each sector included in the active set, an uplink/downlink PUSC sub-channel having an equal sub-carrier to a particular MSS;
defining MAP information elements for notifying the MSS of information about the allocated sub-channel; and
controlling a soft handover according to the classified groups.

22. The method as claimed in claim 21, wherein the active set is a set of base stations (BSs) which currently provide wireless channels for data transmission/reception to the MSS.

23. The method as claimed in claim 21, wherein a holding set is a set of BSs which are not included in the active set by a determination of a system.

24. The method as claimed in claim 21, wherein the neighbor set is a set of BSs remaining after the exception of the BSs included in the active set and the holding set from among the neighbor BSs.

25. The method as claimed in claim 21, wherein the step of classifying the neighbor sectors into the predetermined number of groups comprises the steps of:

comparing a preamble reception intensity of a predetermined sector included in the neighbor set with the greatest preamble reception intensity of the active set;
when a first condition is satisfied, comparing a preamble arrival time of the predetermined sector with an earliest preamble arrival time of the active set;
when a second condition is satisfied, determining whether or not to allow the predetermined sector to be included in the active set based on establishment of the system, and reporting the determination to the MSS; and
including the predetermined sector in one of the active set and the holding set depending on the determination.

26. The method as claimed in claim 25, wherein the first condition refers to a result value, which is obtained by calculating a difference between the greatest value of intensities of preamble reception signals of sectors included in the active set and an intensity of a preamble reception signal of a predetermined sector included in the neighbor set and then by comparing the calculated difference with a Hysteresis margin, and is expressed

$$(Max\_P\_RX\_AS) - (P\_RX(j)) < H(dB),$$

where 'Max_P_RX_AS' represents the greatest value of intensities of the preamble reception signals received from sectors included in the active set, 'P_RX (j)' represents an intensity of a preamble reception signal received from a j$^{th}$ sector included in the neighbor set, and 'H' represents a Hysteresis margin.

27. The method as claimed in claim 25, wherein the second condition refers to a result value, which is obtained by calculating a difference between an earliest arrival time from among arrival times of preamble reception signals of sectors included in the active set and an arrival time of a preamble reception signal of a predetermined sector and by comparing the calculated difference with a value, which is obtained by multiplying a constant by a cyclic prefix (CP), and is expressed as

$$Arrival\_Time\_Difference(j)<c*Tg,$$

where 'Arrival_Time_Difference (j)' represents a relative arrival time of a signal received from a j$^{th}$ sector included in the neighbor set, 'c' is a constant equal to or less than '1', and 'Tg' represents a length of a CP.

28. The method as claimed in claim 27, wherein a value of the 'Arrival_Time_Difference (j)' is measured by the MSS, and is included in a soft handover initiation message to be reported to a BS.

29. The method as claimed in claim 28, wherein the soft handover initiation message includes a MSS handover request message.

30. The method as claimed in claim 21, wherein, when the downlink PUSC sub-channel is allocated, the MAP information elements include at least one from among a field for representing a segment number of an neighbor sector transmitting the downlink PUSC sub-channel, a field for representing a cell identifier of the neighbor sector transmitting the downlink PUSC sub-channel, a field for representing an Orthogonal Frequency Division Multiple Access (OFDMA) symbol start position of an allocated data burst, a field for representing a start index number of a sub-channel to transmit a data burst, and a field for representing whether or not an information code of a data burst to be transmitted has undergone repetition coding.

31. The method as claimed in claim 30, wherein the MSS checks a PUSC sub-channel area, in which a data burst allocated through the MAP information elements is located, by using the segment number of the neighbor sector.

32. The method as claimed in claim 30, wherein the MSS selects a sub-carrier included in a downlink PUSC sub-channel, by using the cell identifier of the neighbor sector.

33. The method as claimed in claim 21, wherein the MAP information elements include a field for appointing a range of a PUSC sub-channel area for an neighbor sector, which is allocated by the MAP information elements.

34. The method as claimed in claim 33, wherein the MSS checks information about a sub-channel, which is being used by an neighbor sector, by using bit-map information included in the field for the appointment.

35. The method as claimed in claim 21, wherein, when the uplink PUSC sub-channel is allocated, the MAP information elements include at least one from among a field for representing a segment number of an neighbor sector transmitting an uplink PUSC sub-channel, a field for representing a cell identifier of the neighbor sector transmitting the uplink PUSC sub-channel, a field for representing an Orthogonal Frequency Division Multiple Access (OFDMA) symbol start position of an allocated data burst, a field for representing a start index number of a sub-channel to transmit a data burst, and a field for representing whether or not an information code of a data burst to be transmitted has undergone repetition coding.

36. The method as claimed in claim 35, wherein the MSS checks a PUSC sub-channel area, in which a data burst allocated through the MAP information elements is located, by using the segment number of the neighbor sector.

**37.** The method as claimed in claim 35, wherein the MSS selects a sub-carrier included in an uplink PUSC sub-channel, by using the cell identifier of the neighbor sector.

**38.** A Base Station (BS) apparatus for supporting a soft handover in a communication system employing an Orthogonal Frequency Division Multiple Access (OFDMA) scheme, the BS apparatus comprising:

a sub-channel selector for receiving a control signal from an upper layer used to select an uplink sub-channel and a downlink sub-channel which are allocated to a relevant Mobile Subscriber Station (MSS),

wherein the sub-channel selector controls a selection of a PUSC sub-channel area, a determination of a data burst allocation area, and a selection of sub-carriers to configure a sub-channel by using downlink MAP information elements when the BS transmits a downlink data burst, and controls a selection of a PUSC sub-channel area, a determination of a data burst allocation area, and a selection of sub-carriers to configure a sub-channel by using uplink MAP information elements when the BS receives an uplink data burst.

**39.** The BS apparatus as claimed in claim 38, wherein the sub-channel selector maps information about the uplink PUSC sub-channel on a selected uplink PUSC sub-channel.

**40.** The BS apparatus as claimed in claim 38, wherein the sub-channel selector extracts a baseband signal from a selected downlink PUSC sub-channel.

**41.** A Mobile Subscriber Station (MSS) apparatus for supporting a soft handover in a communication system employing an Orthogonal Frequency Division Multiple Access (OFDMA) scheme, the MSS apparatus comprising:

a sub-channel selector for receiving a control signal from an upper layer and selecting an uplink sub-channel and a downlink sub-channel which are allocated to the MSS;
a preamble measurer for measuring a signal intensity of a received preamble and outputting a measured value; and
an (MAP) PUSC (Partial Usage of Subchannels) area selector for selecting a PUSC area of a MAP message having the best reception quality from among PUSC areas of MAP massages of sectors included in an active set, on the basis of the intensity values of the preamble reception signals measured by the preamble measurer.

**42.** The MSS apparatus as claimed in claim 41, wherein the sub-channel selector controls a selection of a PUSC sub-channel area, a determination of a data burst allocation area, and a selection of sub-carriers to configure a sub-channel by using downlink MAP information elements when the MSS receives a downlink data burst, controls a selection of a PUSC sub-channel area, a determination of a data burst allocation area, and a selection of sub-carriers to configure a sub-channel by using uplink MAP information elements when the MSS transmits an uplink data burst.

**43.** The MSS apparatus as claimed in claim 41, wherein the sub-channel selector maps information about the uplink PUSC sub-channel on a selected uplink PUSC sub-channel.

**44.** The MSS apparatus as claimed in claim 41, wherein the sub-channel selector extracts a baseband signal from a selected downlink PUSC sub-channel.

**45.** A system for supporting a handover in a broadband wireless access communication system which includes a Mobile Subscriber Station (MSS), a serving Base Station (BS) currently providing service to the MSS, and a plurality of neighbor BSs different from the serving BS, in which each of the BSs includes cells using sub-channel bands different from each other, the system comprising:

a MSS for measuring intensities of signals received from the serving BS and the neighbor BSs, transmitting to the serving BS a request for a handover based on the measured signal intensities, establishing a connection with a target BS, to which handover of the MSS is requested, from among the neighbor BSs before terminating a connection with the serving BS, and establishing a simultaneous connection with the two BSs in a handover area, thereby performing a soft handover; and

BSs for allocating a same sub-channel including same sub-carriers to the MSS at the same time when the MSS performs the soft handover.

FIG.1

EP 1 608 198 A1

FIG.2

FIG.3

EP 1 608 198 A1

FIG.4A

23

Cell 1(420) : Sector α(421)

Cell 2(430) : Sector r(433)

FIG.4B

FIG.5A

FIG.5B

FIG.6A

FIG.6B

FIG.7A

FIG.7B

START

811
Max_P_RX_AS − P_RX (j) < H (dB) — NO

YES

813
1st_Arrival_Time_AS − Arrival_Time (j) < c*Tg — NO

YES

815
DOES SYSTEM DIRECT TO BE INCLUDED IN ACTIVE SET ? — NO

YES

817
INCLUDE SECTOR j IN HOLDING SET

INCLUDE SECTOR j IN ACTIVE SET — 819

END

FIG.8

FIG.9

EP 1 608 198 A1

FIG.10

EP 1 608 198 A1

**European Patent Office**

**EUROPEAN SEARCH REPORT**

Application Number

EP 05 01 2909

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 902 551 A (LUCENT TECHNOLOGIES INC) 17 March 1999 (1999-03-17) * abstract * * paragraphs [0002], [0003], [0007], [0008] * * paragraphs [0010], [0027], [0029] * * paragraphs [0031] - [0039] * | 1-45 | H04Q7/38 |
| A | "Comments on IEEE 802.16e Handoff Draft" IEEE 802.16 BROADBAND WIRELESS ACCESS WORKING GROUP, [Online] 11 March 2003 (2003-03-11), pages 0-33, XP002346783 Retrieved from the Internet: URL:http://www.ieee802.org/16/tge/contrib/C80216e-03_21r1.pdf> [retrieved on 2005-09-26] * page 1, lines 14-32 * * page 8, lines 10-21 * * page 15, lines 1-22 * * page 18, lines 1-35 * * pages 22-27 * * figure AAA * | 1-45 | |
| A | "Enhanced Handover Mechanism for supporting Active BS Set in IEEE P802.16e/D1-2004" IEEE 802.16 BROADBAND WIRELESS ACCESS WORKING GROUP, [Online] 15 March 2004 (2004-03-15), pages 1-20, XP002346785 Retrieved from the Internet: URL:http://www.ieee802.org/16/tge/contrib/C80216e-04_30.pdf> [retrieved on 2005-09-26] * pages 2-11 * | 1-45 | TECHNICAL FIELDS SEARCHED (Int.Cl.7) H04Q |

The present search report has been drawn up for all claims

| Place of search | Date of completion of the search | Examiner |
|---|---|---|
| Berlin | 27 September 2005 | Alonso Maleta, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 2909

27-09-2005

| Patent document cited in search report | | Publication date | Patent family member(s) | | Publication date |
|---|---|---|---|---|---|
| EP 0902551 | A | 17-03-1999 | JP | 11178036 A | 02-07-1999 |
| | | | US | 6038450 A | 14-03-2000 |

For more details about this annex : see Official Journal of the European Patent Office, No. 12/82